Europäisches Patentamt

European Patent Office

Office européen des brevets

(11) Publication number: **0 505 789 A2**

## EUROPEAN PATENT APPLICATION

(21) Application number: **92103842.8**

(22) Date of filing: **06.03.92**

(51) Int. Cl.5: **A01G 3/04**

Priority: 150391 ITU PD91000016.

(30) Priority: **15.03.91**

(43) Date of publication of application:
**30.09.92 Bulletin 92/40**

(84) Designated Contracting States:
**DE ES FR GB GR**

(71) Applicant: **VALEX INTERNATIONAL S.p.A.
Via dell'Artigianato, 35 Z.A.
I-36035 Marano Vicentino (Vicenza)(IT)**

(72) Inventor: **Anzolin, Bruno
Via Martiri Della Libertà
I-36030 San Vito di Leguzzano (Vicenza)(IT)**

(74) Representative: **Modiano, Guido et al
c/o Modiano & Associati S.r.l. Via Meravigli, 16
I-20123 Milano(IT)**

(54) **Improved hedge trimmer.**

(57) The improved hedge trimmer includes a box-like body (1), with a grip handle (2), which contains a motor unit (3) which is associated with cam means (14,15) which are connected to a pair of superimposed serrated blades (18,21). The blades move reciprocatingly along their axis. The hedge trimmer according to the invention is characterized in that the motor unit is constituted by a direct-current or alternating-current electric motor (3) which is kinematically associated with the cam means by virtue of a belt transmission (5-7).

Fig. 2

The present invention relates to an improved hedge trimmer.

Hedge trimmers are already known which are substantially constituted by a box-like body with a grip handle inside which a motor is arranged; said motor, which is usually of the alternating-current type, transmits motion, by means of a pair of gears, to the shaft on which cam means are keyed; said cam means are connected to a pair of superimposed serrated blades which are actuated so as to move reciprocatingly along their axis in mutually opposite directions so as to cut branches and/or leaves which find themselves between the teeth.

During use, the teeth of the blades may interact with iron wires or other items and be subjected to considerable stresses and impacts which are discharged directly onto the reduction shaft, onto the teeth of the gears and onto the motor, severely stressing the rolling bearings which support it and thus severely stressing its operation.

The aim of the present invention is to provide an improved hedge trimmer which such an arrangement of its internal elements that any stresses or blows to which the serrated blades are subjected are not discharged directly onto the transmission which would compromise its integrity.

Another important object is to provide an improved hedge trimmer which is provided with an innovative flexible coupling device which is suitable for preserving the integrity of the internal elements.

Still another object is to provide an improved hedge trimmer which is not constructively more complicated than current ones.

Not least object is to provide an improved hedge trimmer which can be manufactured with conventional production facilities.

This aim, these objects and others which will become apparent hereinafter are achieved by an improved hedge trimmer of the type which comprises a box-like body, with a grip handle, which contains a motor unit which actuates cam means connected to a pair of superimposed serrated blades suitable for moving reciprocatingly along their own axis, said hedge trimmer being characterized in that said motor unit is constituted by a direct-current electric motor which is kinematically connected to said cam means by virtue of a belt transmission.

Further characteristics and advantages of the invention will become apparent from the detailed description of an embodiment thereof, given by way of non-limitative description in the accompanying drawings, wherein:

figure 1 is a partially sectional side view of the body of the hedge trimmer according to the invention;

figure 2 is an enlarged view of a detail of figure 1.

With reference to the above figures, the improved hedge trimmer according to the invention comprises a box-like body 1, with a grip handle 2, inside which a direct-current 220-volt electric motor 3 is accommodated; said motor is conveniently connected to a power supply circuit, not illustrated, with a related rectifier bridge.

A small toothed pulley 5 is keyed on the shaft 4 of said motor 3 and is kinematically associated, by means of a toothed belt 6, with a large toothed pulley 7 which, by means of a pair of rolling bearings 8, is rotatably connected to a shaft 9 which is parallel to the shaft 4 of the motor 3.

In particular, the two bearings 8, which are divided by a spacer 8a, are packed, by means of screws 10 which pass through the pulley 7, in a corresponding perforated ring 10a between two disk-like washers 11 which are arranged axially opposite with respect to said pulley 7.

The threaded ends of said screws 10 engage corresponding threaded holes of a first disk-like element 12 which is fixed with respect to the threaded ring 10a.

Said washers 11 press, externally to the bearings 8, not directly on the pulley 7 but on respective elastic rings 13, for example of the O-ring type, which are accommodated in corresponding recesses of said pulley 7 and protrude slightly therefrom, transmitting rotary motion from the pulley to the disk-like element 12 and limiting its static torque.

Said disk-like element 12 is axially provided, in positions which are eccentric with respect to the shaft 9 and are diametrically opposite, with two holes for corresponding pivots 14 and 15.

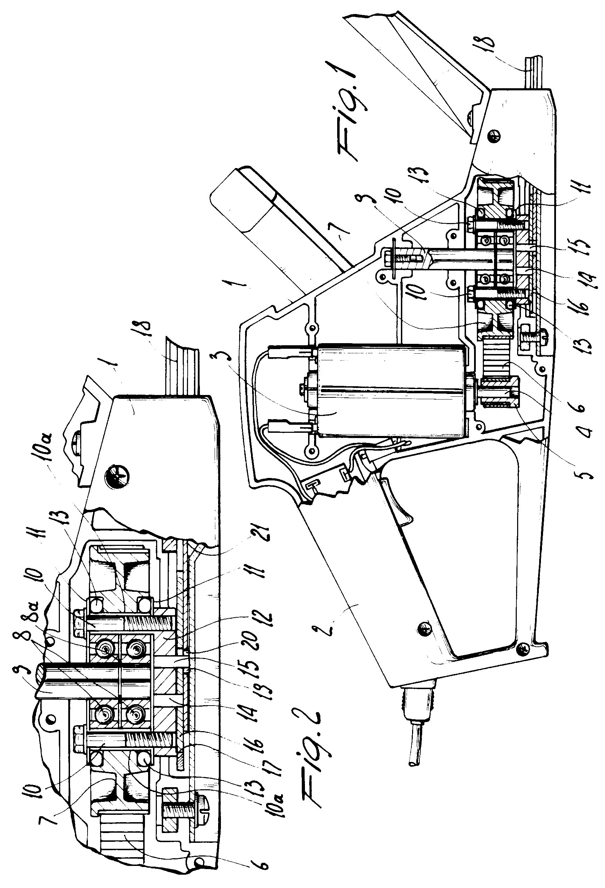

The pivot designated by 14 in figure 1 is inserted on the axis of a second disk-like element 16 which is thus rigidly associated with the first one and is eccentric thereto.

Said second disk-like element 16 is arranged between the walls of a slotted guiding hole 17 which is defined in one end of a first serrated blade 18 which protrudes from the box-like body 1 and is guided so as to move with a reciprocating translatory motion.

The second disk-like element 16 is superimposed on a third disk-like element 19 which has a small diameter and on which the pivot 15 is axially inserted and conveniently passes through said element 16.

Said third disk-like element 19, which is eccentric with respect to the shaft 9, is contained in a corresponding slotted guiding hole 20 which is defined in the end which is internal to the body of a second serrated blade 21 on which the first blade 18 is superimposed.

The second blade 21 is also actuated with a reciprocating translatory motion, but its orientation is opposite to that of the preceding blade.

At this point it should be stressed that the presence of a belt transmission which kinematically connects the shaft 4 of the motor to the plate 12 of the eccentric disk-like elements prevents any stresses to which the blades are accidentally subjected from affecting the structure of the motor which would damage it.

If metallic items or other elements end up between the teeth of the blades, the transmission is furthermore provided with effective flexible couplings constituted by the elastic rings 13.

In practice it has thus been observed that the improved hedge trimmer according to the invention has achieved the intended aim and objects.

In practice, the materials employed, so long as compatible with the contingent use, as well as the dimensions, may be any according to the requirements. Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

1. Improved hedge trimmer of the type which comprises a box-like body (1), with a grip handle (2), which contains a motor unit (3) which actuates cam means (14,15) connected to a pair of superimposed serrated blades (18,21) which are suitable for moving reciprocatingly along their own axis, said hedge trimmer being characterized in that said motor unit (3) is constituted by a direct-current electric motor which is kinematically connected to said cam means by virtue of a belt (5-7) transmission.

2. Improved hedge trimmer according to claim 1, characterized in that said electric motor (3) is of the direct-current type.

3. Improved hedge trimmer according to claim 1, characterized in that said electric motor (3) is of the permanent-magnet direct-current type.

4. Improved hedge trimmer according to claim 1, characterized in that said electric motor is of the type with an alternating-current commutator.

5. Improved hedge trimmer according to claims 1 to 4, characterized in that said belt transmission is of the type with a toothed belt (6) with related toothed pulleys (5,7).

6. Improved hedge trimmer according to claims 1 to 4, characterized in that the driven pulley (7) is rotatably connected to a shaft (9) which is parallel to the shaft (4) of said motor (3).

7. Improved hedge trimmer according to one or more of the preceding claims, characterized in that the connection between the driven pulley (7) and the related shaft (9) is performed by means of a pair of rolling bearings (8) which are packed, by means of screws (10), between two end washers (11).

8. Improved hedge trimmer according to one or more of the preceding claims, characterized in that said washers (11) pack corresponding elastic rings (13) which are accommodated in respective seats provided on said driven pulley (7) and protrude slightly therefrom, said rings elastically associating said driven pulley with said bearings (8).

9. Improved hedge trimmer according to one or more of the preceding claims, characterized in that the threaded ends of said screws (10) engage corresponding holes of a disk-like element (12) which flanks said driven pulley (7) and is coaxial to the corresponding shaft, said cam means engaging said disk-like element.

Fig.1

Fig.2